# EUROPÄISCHE PATENTSCHRIFT

(11) **EP 2 885 166 B1**
(45) Veröffentlichungstag und Bekanntmachung des Hinweises auf die Patenterteilung: **16.05.2018**
(21) Anmeldenummer: 13753810.4
(22) Anmeldetag: 12.08.2013
(51) Int. Cl.: B60R 21/239

(54) **GASSACKMODUL MIT EINER ADAPTIVEN BEEINFLUSSUNGSEINRICHTUNG**
AIRBAG MODULE WITH AN ADAPTIVE INFLUENCING DEVICE
MODULE D'AIRBAG À SYSTÈME D'ACTION ADAPTATIF

(30) Priorität: 18.08.2012 DE 102012016460
(43) Veröffentlichungstag der Anmeldung: 24.06.2015
(73) Patentinhaber: Autoliv Development AB, 447 83 Vårgårda (SE)
(72) Erfinder: NEBEL, Raimund, 86836 Obermeitingen (DE); WALLAT, Nico, 81827 München (DE); HOLGER, Zang, 85232 Bergkirchen (DE); PEIZ, Roland, 86567 Hilgertshausen (DE); ROTTACH, Alexander, 80339 München (DE); KNAUSS, Jürgen, 90587 Obermichelbach (DE); FÖRG, Andreas, 80639 München (DE); DRÖSSLER, Wolfgang, 82194 Gröbenzell (DE); HOFFMANN, Jens, 63741 Aschaffenburg (DE); WEBER, Marcus, 97531 Untertheres (DE); BURGER, Michael, 857 57 Karlsfeld (DE)
(74) Vertreter: Schön, Thilo
(86) Internationale Anmeldenummer: PCT/EP2013/002412
(87) Internationale Veröffentlichungsnummer: WO 2014/029473

(56) Entgegenhaltungen:
- WO-A1-2012/130445
- DE-A1-102005 039 418
- DE-A1-102006 051 552
- DE-A1-102008 028 389
- DE-A1-102009 055 266
- US-A1- 2011 148 085

## Beschreibung

Die Erfindung betrifft ein Gassackmodul mit einer adaptiven Beeinflussungseinrichtung nach dem Oberbegriff des Anspruchs 1.

Nahezu jeder Gassack, insbesondere jeder Frontgassack, weist eine Ventilationseinrichtung auf, durch die Gas aus dem von der Außenhülle des Gassacks umschlossenen Gasraum - im folgenden erster Gasraum - bei Auftreffen der zu schützenden Person entweichen kann, so dass Bewegungsenergie der zu schützenden Person dissipiert wird und die zu schützende Person nicht einfach von der Gassackhülle des Gassackes zurückprallt. Im einfachsten Fall ist eine solche Ventilationseinrichtung schlicht eine Ventilationsöffnung, insbesondere eine Ventilationsöffnung in der Gassackhülle.

Um unterschiedlichen Unfallsituationen und/oder dem Gewicht der zu schützenden Person Rechnung tragen zu können, sind im Stand der Technik adaptive Beeinflussungseinrichtung zur Beeinflussung der Form des Gassacks oder des Drucks im Gasraum bekannt. Soll die Form des Gassacks beeinflusst werden, ist in der Regel ein lösbares Fangband vorgesehen. Weiterhin sind adaptive Ventilationseinrichtungen bekannt, welche zusätzlich zu der Ventilationsöffnung ein Drosselelement aufweisen, welches in einem ersten Zustand den Gasfluss durch die Ventilationsöffnung stärker drosselt als in einem zweiten Zustand. In der Regel ist hierbei der erste Zustand der gedrosselte oder sogar geschlossene Zustand und der zweite Zustand ist der weniger gedrosselte, beispielsweise vollständig geöffnete Zustand.

Bei manchen solchen Gassackmodulen mit adaptiven Beeinflussungseinrichtung ist weiterhin eine Betätigungseinheit vorgesehen, welche es möglich macht, die adaptiven Beeinflussungseinrichtung aktiv - auf ein äußeres Signal hin - von ihrem ersten in ihren weiten Zustand zu überführen. Beispielsweise aus der US 6,648,371 B2 ist hierzu ein pyrotechnisch arbeitender Aktuator bekannt geworden. Hierbei ist das erste Ende eines Zugbandes mit dem Drosselelement und das zweite Ende dieses Zugbandes mit einem Bolzen des Aktuators verbunden. Der Aktuator ist hierbei insbesondere am Gehäuseboden des Gassackmodules gehalten. Solange der Aktuator nicht betätigt wird, ist somit das Drosselelement über das Zugband mit dem Gehäuseboden verbunden. Das Zugband kommt bei vollständig expandierter Gassackhülle in einen gespannten Zustand, welcher das Drosselelement in seinem ersten Zustand hält. Wird der Aktuator betätigt, so wird der Bolzen, der das zweite Ende des Zugelementes hält, mittels einer pyrotechnischen Ladung abgesprengt, das Zugelement verliert seine Spannung und das Drosselelement geht in seinen zweiten, nämlich seinen ungedrosselten Zustand über. Diese Technik funktioniert grundsätzlich sehr gut, hat jedoch den Nachteil, dass innerhalb des Gasraumes der Gassachülle Teile, wie beispielsweise der Bolzen, umherfliegen können, und dass innerhalb der Gassackhülle offene Flammen durch die pyrotechnische Ladung auftreten. Weiterhin speist die pyrotechnische Ladung weiteres Gas in den Gasraum der Gassackhülle ein, was nicht immer erwünscht ist.

Die DE 10 2009 055 266 A1 zeigt ein ähnliches Konzept. Hier wird ein Halteelement des Bandes von einem Träger, mit dem es im Ausgangszustand verbunden ist, bedarfsweise abgesprengt.

Auch die US 2011/0148085 A1 zeigt einen pyrotechnisch arbeitenden Aktuator zur Steuerung eines aktiv steuerbaren, adaptiven Ventils.

Die gattungsbildende DE 10 2005 039 418 B4 schlägt ein Gassackmodul mit einer adaptiven Ventilationseinrichtung vor, bei der die Betätigungseinheit durch ein "kleines Gassackmodul innerhalb des Gassackmoduls" gebildet wird. Hierbei ist das Drosselelement durch einen zweiten, kleinen Gassack innerhalb des Gasraumes der eigentlichen Gassackhülle beeinflussbar. Die Hülle dieses zweiten Gassackes - im folgenden als zweite Hülle bezeichnet - umschließt einen zweiten Gasraum, welcher durch einen Gasgenerator in Form einer Zündkapsel mit Gas gefüllt werden kann. Geschieht dies, so hebt die dann mit Gas gefüllte zweite Hülle das in Form eines Lappens vorliegende Drosselelement von der Ventilationsöffnung ab, so dass die Ventilationsvorrichtung in ihren zweiten, ungedrosselten Zustand übergeht. Nachteilig hieran ist, dass die zweite Hülle und die Ventilationsöffnung unmittelbar zueinander benachbart sein müssen, was häufig nur sehr schwer zu realisieren ist. Insbesondere ist es kaum möglich, die Ventilationsöffnung in der Gassackhülle vorzusehen.

Aus der DE 10 2008 028 389 A1 ist ein Frontgassack mit zwei Teilgasräumen, welche durch eine Trennwand voneinander getrennt sind, bekannt. In der Trennwand ist wenigstens ein adaptives Ventil vorgesehen, welches über ein Zugelement gesteuert wird. Das dem Ventil abgewandte Ende des Zugelements ist entweder mit der Innenseite der Prallfläche oder mit einem gehäusefesten Bauteil fest verbunden, so dass die Steuerung des adaptiven Ventils rein passiv (ohne externes Signal) erfolgt.

Hiervon ausgehend stellt sich die vorliegende Erfindung die Aufgabe, ein gattungsgemäßes Gassackmodul derart weiterzubilden, dass eine große bauliche und funktionale Flexibilität gegeben ist. In dem Fall, dass die adaptive Beeinflussungseinrichtung eine adaptive Ventilationseinrichtung ist, soll es insbesondere möglich sein, die Ventilationsöffnung in einem Abschnitt der Gassackhülle vorzusehen. Bei dieser Gassackhülle kann es sich um die Außenhülle, welche den ersten Gasraum von der Umgebung trennt, oder um eine Zwischenwand-Hülle, welche zwei Kammern voneinander trennt, handeln. Im folgenden wird deshalb diese Hülle zusammenfassend als "erste Hülle" bezeichnet.

Diese Aufgabe wird durch ein Gassackmodul mit den Merkmalen des Anspruchs 1 gelöst.

Es ist ein Zugelement vorgesehen, dessen erstes Ende mit der adaptiven Beeinflussungseinrichtung gekoppelt ist oder die adaptiven Beeinflussungseinrichtung bildet und dessen zweites Ende bei nicht befülltem zweitem Gasraum mit der zweiten Hülle der Betätigungseinrichtung gekoppelt und bei befülltem zweitem Gasraum von der zweiten Hülle entkoppelt ist.

Im Falle einer adaptiven Ventilationseinrichtung beeinflusst die zweite Hülle das Drosselelement nicht unmittelbar, sondern mittels des Zugelementes, dessen erstes Ende mit dem Drosselelement gekoppelt ist oder das Drosselelement bildet und dessen zweites Ende bei nicht befülltem Gasraum der zweiten Hülle mit dieser gekoppelt und bei befülltem Gasraum der zweiten Hülle von dieser entkoppelt ist. Hierdurch bleiben sämtliche Vorteile des gattungsgemäßen Gassackmodules erhalten, ohne jedoch dessen Nachteile in Kauf nehmen zu müssen.

Ein weiterer Vorteil des erfindungsgemäßen Gassackmoduls ist, dass die aus zweiter Hülle und ihr zugeordneter Gasquelle bestehende Betätigungseinheit als Standardbaugruppe ausgeführt werden kann, welche für eine Vielzahl von unterschiedlichen Gassackgeometrien, Gassackinnendrücken und Anwendungen verwendet werden kann. Insbesondere ist es hierbei möglich, diese Standardbaugruppe sowohl als Betätigungseinheit einer adaptiven Ventilationseinheit als auch als Betätigungseinheit in einem Dual-Depth-Gassack einzusetzen. Dies ist bei der Betätigungseinheit der gattungsbildenden DE 10 2005 039 418 B4 nicht der Fall.

Um keinen zusätzlichen Bauraum zu benötigen und um sicherzustellen, dass die zweite Hülle problemlos vollständig expandieren kann, kann die zweite Hülle vollständig innerhalb des von der ersten Gassackhülle umschlossenen Gasraumes angeordnet sein. Es ist jedoch auch möglich, die zweite Hülle vollständig außerhalb des von der ersten Gassackhülle umschlossenen Gasraumes anzuordnen.

Es ist sowohl möglich, die zweite Hülle so auszubilden, dass sie auch nach ihrer Befüllung vollständig geschlossen bleibt, als es auch möglich ist, diese so auszubilden, dass sie sich bei ihrer Befüllung öffnet. Je nach den konkreten Gegebenheiten kann beides Vorteile haben.

In einer ersten bevorzugten Ausführungsform ist das zweite Ende des Zugelementes über eine Aufbrechverbindung mit der zweiten Hülle verbunden solange deren zweiter Gasraum nicht befüllt ist. Diese Aufbrechverbindung ist derart ausgestaltet, dass sie aufbricht, wenn der zweite Gasraum mit Gas befüllt und somit die zweite Hülle expandiert ist. Hierbei kann die Aufbrechverbindung insbesondere als Reißnaht ausgestaltet sein. Diese Ausführungsform hat den Vorteil einer sehr einfachen Herstellbarkeit und eines geringen Gewichtes.

In einer zweiten bevorzugten Ausführungsform ist das zweite Ende des Zugelementes als Schlaufe ausgeführt, welche sich bei nicht befülltem zweitem Gasraum um die zweite Hülle erstreckt. Hierbei ist der Umfang der Schlaufe kürzer als der maximale Umfang der zweiten Hülle bei befülltem zweitem Gasraum, so dass die Schlaufe durch die expandierende zweite Hülle geöffnet wird. Hier kann die zweite Hülle insbesondere als Metallfolie ausgebildet sein, was den Vorteil einer großen Widerstandsfähigkeit, insbesondere auch gegenüber heißen Gasen, welche den ersten Gasraum füllen, hat.

Die zweite Hülle kann vollständig separat ausgebildet sein. Es ist aber auch möglich, dass ein Abschnitt der ersten Hülle oder ein Abschnitt einer Verstärkungslage der ersten Hülle einen Teil der zweiten Hülle bildet.

Eine wichtige Anwendung der Erfindung ist, wie bereits erwähnt, die Ansteuerung einer adaptiven Ventilationseinrichtung. Eine aktive Beeinflussung der Form der-Gassackhülle (dual depth) ist aber beispielsweise ebenso möglich.
Die Erfindung wird nun anhand bevorzugter Ausführungsbeispiele mit Bezug auf die Figuren näher erläutert. Hierbei zeigen:
- Figur 1: eine erste Ausführungsform eines erfindungsgemäßen Gassackmodules in einer schematisierten Schnittdarstellung im Ruhezustand,
- Figur 2: das in Figur 1 Gezeigte nach Zündung des Gasgenerators und Befüllung des ersten Gasraumes, welcher von der Gassackhülle - hier als erste Hülle bezeichnet - umschlossen ist, wobei sich die Ventilationseinrichtung jedoch noch in einem gedrosselten Zustand befindet,
- Figur 3: das in Figur 2 Gezeigte nach Aktivierung einer Betätigungseinheit, wodurch die Ventilationseinrichtung in einen ungedrosselten Zustand übergegangen ist,
- Figur 4: eine Betätigungseinheit, welche ähnlich zu der in den Figuren 1 bis 3 gezeigten ist, in einem der Figur 2 entsprechenden Zustand,
- Figur 5: die Betätigungseinheit aus Figur 4 in einem der Figur 3 entsprechenden Zustand,
- Figur 6: eine Variation zu dem in der Figur 4 gezeigten Ausführungsbeispiel,
- Figur 7: das in Figur 6 Gezeigte in einem der Figur 5 entsprechenden Zustand,
- Figur 8: eine weitere Variation zu dem in der Figur 4 gezeigten Ausführungsbeispiel,
- Figur 9: das in Figur 8 Gezeigte in einem der Figur 5 entsprechenden Zustand,
- Figur 10: ein zweites Ausführungsbeispiel der ersten Ausführungsform einer Betätigungseinheit in einem der Figur 4 entsprechenden Zustand,
- Figur 11: die Betätigungseinheit aus Figur 10 in einem der Figur 5 entsprechenden Zustand,
- Figur 12: ein drittes Ausführungsbeispiel der ersten Ausführungsform einer Betätigungseinheit in einem der Figur 4 entsprechenden Zustand,
- Figur 13: das in Figur 12 Gezeigte in einem der Figur 5 entsprechenden Zustand,
- Figur 14: eine Variation zu dem in Figur 12 gezeigten Ausführungsbeispiel,
- Figur 15: das in Figur 12 Gezeigte in einem der Figur 5 entsprechenden Zustand,
- Figur 16: eine zweite Ausführungsform einer Betätigungseinheit in einer perspektivischen Darstellung,
- Figur 17: einen Schnitt entlang der Ebene E-E aus Figur 16,
- Figur 18: das in Figur 17 Gezeigte nach Zündung der Betätigungseinheit und
- Figur 19: eine Betätigungseinheit, welche ähnlich zu der in Figur 8 ist, in einem montierten Zustand,
- Figur 20: ein zweites Anwendungsbeispiel der Erfindung in einem der Figur 2 entsprechenden Zustand und
- Figur 21: das in Figur 20 Gezeigte in einem der Figur 3 entsprechenden Zustand.

Die Erfindung wird zunächst anhand eines Anwendungsbeispiels, bei dem die adaptive Beeinflussungseinrichtung eine adaptive Ventilationseinrichtung ist, beschrieben.

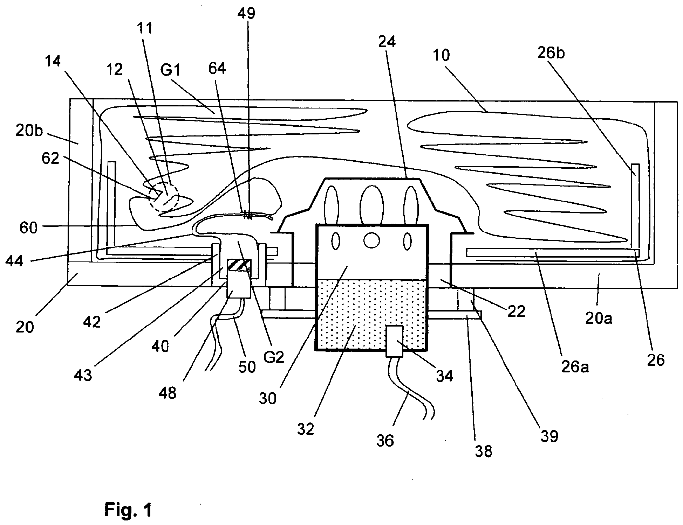

Die Figuren 1 bis 3 zeigen ein Front-Gassackmodul, nämlich ein Fahrer-Gassackmodul zum Einbau in den Nabenbereich eines Lenkrades. Dieses ist grundsätzlich wie üblich aufgebaut: Es weist nämlich ein Gehäuse 20 mit einer Gehäusewand 20b und einem Gehäuseboden 20a auf, in welches im Ruhezustand die hier als erste Hülle 10 bezeichnete Gassackhülle eingefaltet ist. Diese erste Hülle 10 umschließt einen ersten Gasraum G1. Die erste Hülle 10 wird durch ein Halte- und Deflektorelement 26 am Gehäuseboden 20a gehalten, wozu das Halte- und Deflektorelement 26 einen Boden 26a aufweist, von dem sich weiterhin eine umlaufende Seitenwand 26b erstreckt. Zur Befüllung des ersten Gasraumes dient ein erster Inflator, nämlich ein Gasgenerator 30, welcher sich im gezeigten Ausführungsbeispiel durch eine Öffnung 22 im Gehäuseboden 20a und durch eine Durchbrechung im Boden des Halte- und Deflektorelements 26 ins Innere des Gehäuses 20 und somit in den ersten Gasraum G1 erstreckt. Dieser Gasgenerator 30 weist in üblicher Art und Weise eine Treibladung 32 auf, welche durch eine erste Zündkapsel 34 gezündet wird, sobald diese über ein Zündkabel 36 elektrisch gezündet wird. Im oberen Bereich des Gasgenerators 30 befinden sich Austrittsöffnungen für das erzeugte Gas; dieser Bereich des Gasgenerators 30 wird von einem Diffusor 24 überspannt. Die Verbindung zwischen Gasgenerator 30 und Gehäuseboden 20a erfolgt im gezeigten Ausführungsbeispiel über einen Flansch 38 des Gasgenerators und Dämpfer 39.

An der ersten Hülle 10 ist eine adaptive Ventilationseinrichtung 11 vorgesehen, über die der erste Gasraum G1 entlüftet werden kann. Es kann eine zweite, insbesondere eine nicht-adaptive Ventilationseinrichtung, insbesondere in Form eines Loches in der ersten Hülle vorgesehen sein. Dies ist jedoch nicht dargestellt. Die adaptive Ventilationseinrichtung 11 weist eine Ventilationsöffnung 12 und im gezeigten Ausführungsbeispiel eine Tülle, welche die Ventilationsöffnung 12 umgibt, auf. Diese Tülle 14 bildet das Drosselelement der adaptiven Ventilationseinrichtung 11. Es ist ein Zugelement in Form eines Zugbandes 60 vorgesehen, dessen erstes Ende 62 das der ersten Hülle 10 abgewandte Ende der Tülle 14 derart umläuft, dass die Tülle 14 zusammengezogen wird, wenn das Zugband 60 unter Zugspannung steht, so dass die Ventilationseinrichtung in diesem Zustand geschlossen oder zumindest gedrosselt ist. Ist der erste Gasraum G1 mit Gas gefüllt und steht das Zugband 60 nicht unter Zugspannung, so wird die Tülle durch den im ersten Gasraum herrschenden Druck nach außen gestülpt und die Ventilationseinrichtung geht in ihren ungedrosselten Zustand über. Eine solche Ventilationseinrichtung ist im Detail beispielsweise in der US 2006/0071461 A1 beschrieben, auf welche hiermit Bezug genommen wird, sodass der genaue Aufbau dieser Ventilationseinrichtung nicht näher beschrieben werden muss.

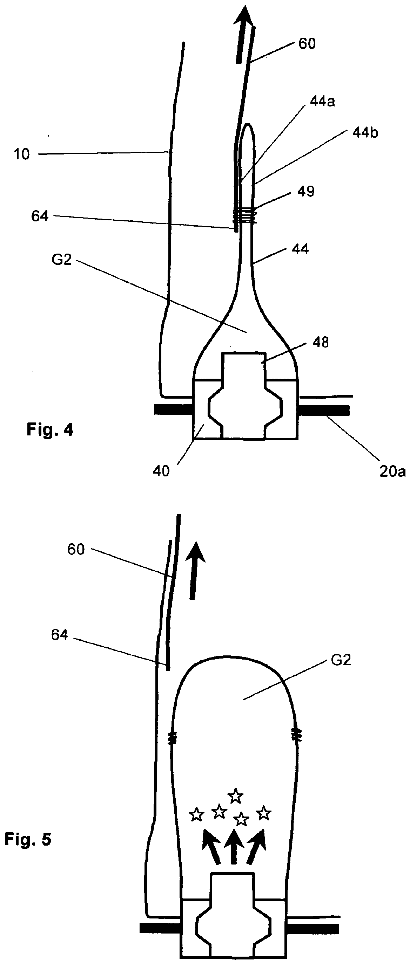

Das zweite Ende 64 des Zugbandes 60 ist in einem Ausgangszustand mit einem Element einer Betätigungseinheit 40 verbunden. Die Betätigungseinheit 40 dient dazu, bei expandierter erster Hülle 10 die Ventilationseinrichtung 11 (das heißt, die Tülle 14) von einem ersten, nämlich einem gedrosselten, in einen zweiten, nämlich einen ungedrosselten, Zustand zu überführen. Diese Betätigungseinheit 40 ist hier wie folgt aufgebaut:
Die Betätigungseinheit 40 weist ein zweites Gehäuse 42 auf, welches sich durch den Gehäuseboden 20a in den ersten Gasraum G1 hinein erstreckt und zu diesem hin offen ist. An diesem zweiten Gehäuse 42 ist eine zweite Zündkapsel 48 gehalten, deren Zündladung sich im Hohlraum 43 des zweiten Gehäuses befindet. Von dieser zweiten Zündkapsel erstreckt sich ebenfalls ein Zündkabel, nämlich das Zündkabel 50. Die zweite Zündkapsel 48 dient als Gasquelle des Betätigungselementes 40. Mit dem zweiten Gehäuse 42 ist eine zweite Hülle 44 dicht verbunden, welche einen zweiten Gasraum G2 umschließt, welcher durch das Gas der zweiten Zündkapsel 48 gefüllt werden kann. Diese zweite Hülle 44 kann aus gewöhnlichem Gassackgewebe bestehen. Somit bildet die Betätigungseinheit 40 gewissermaßen ein kleines Gassackmodul innerhalb des eigentlichen Gassackmoduls. Das zweite Ende 64 des Bandes 60 ist derart mit der zweiten Hülle 44 vernäht, dass die Naht, nämlich die Reißnaht 49, zwei Lagen der zweiten Hülle 44 zusammennäht. Es liegen somit abschnittsweise drei Lagen vor, nämlich das zweite Ende 64 des Zugbandes 60, sowie zwei Lagen der zweiten Hülle 44. Dies wird man später nochmals mit Bezug auf die Figur 4 besser sehen.

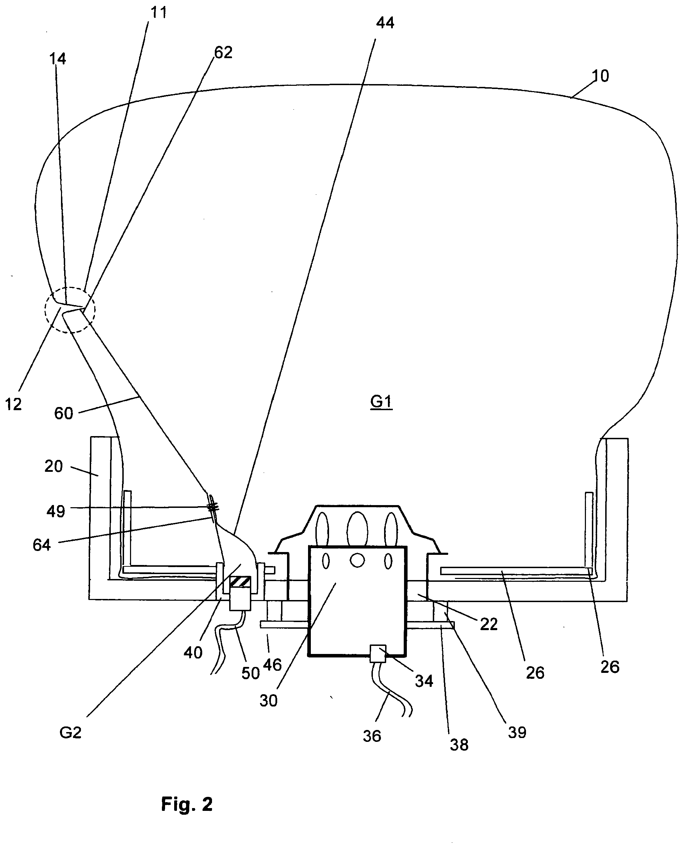

Wird nun der Gasgenerator 30 gezündet, so strömt Gas in den ersten Gasraum G1 und die erste Hülle 10 expandiert in gewohnter Weise. Hierbei spannt sich das Zugband 60, wodurch die Tülle 14 zusammengezogen wird und kein, oder nur wenig Gas durch die Ventilationsöffnung 12 austreten kann, so dass sich die Ventilationseinrichtung in einem ersten, gedrosselten Zustand befindet. Auch der Zustand der das Drosselelement bildenden Tülle 14 wird hier als erster Zustand bezeichnet (Fig. 2).

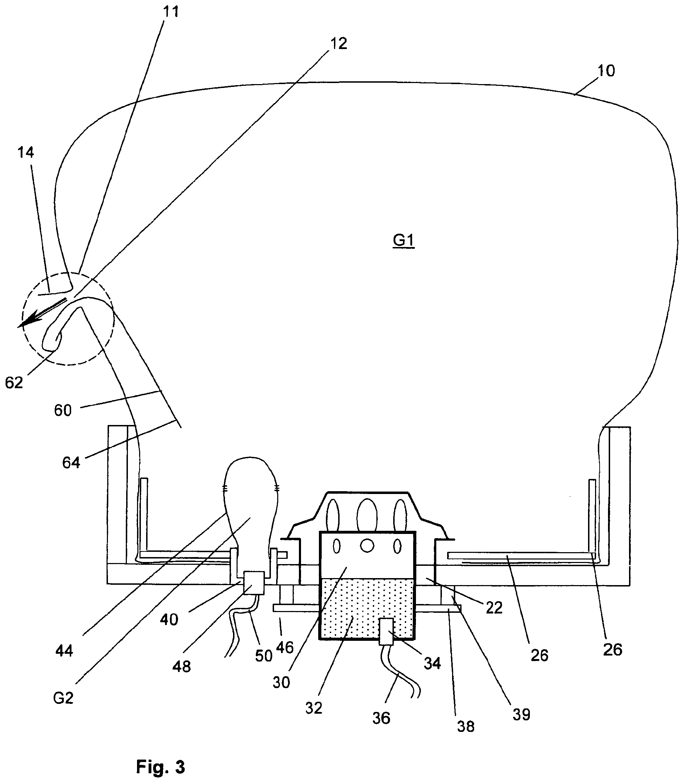

Wird nun die zweite Zündkapsel 48 gezündet, so füllt das von ihr erzeugte Gas den zweiten Gasraum G2, wodurch die zweite Hülle 44 expandiert. Durch diese Expansion wird die Reißnaht zerrissen und somit das zweite Ende 64 des Zugbandes 60 von der zweiten Hülle 44 getrennt. Hierdurch kann das Band 60 keine Zugkräfte mehr aufnehmen und die Tülle 14 wird durch den im ersten Gasraum herrschenden Druck nach außen gestülpt, wodurch die Ventilationsöffnung 12 freigegeben wird und die Ventilationseinrichtung und damit auch die Tülle 14 in einen zweiten, nämlich einen ungedrosselten Zustand übergeht. Die zweite Hülle 44 bleibt geschlossen, so dass die zweite Zündkapsel 48 und das von ihr erzeugte Gas nicht mit anderen Elementen des Gassackmodules interagieren kann (Fig. 3).

Die Figuren 4 und 5 zeigen nochmals eine sehr ähnliche Betätigungseinheit 40, welche jedoch kein echtes Gehäuse aufweist. Die Funktionsweise ist identisch zu dem eben Beschriebenen, wobei die Figur 4 den Zustand der Figur 2 und die Figur 5 den Zustand der Figur 3 zeigt. Insbesondere kann man die Vernähung des Zugbandes 60 mit den zwei Lagen 44a, 44b der zweiten Hülle im Ausgangszustand (Fig. 4) gut erkennen.

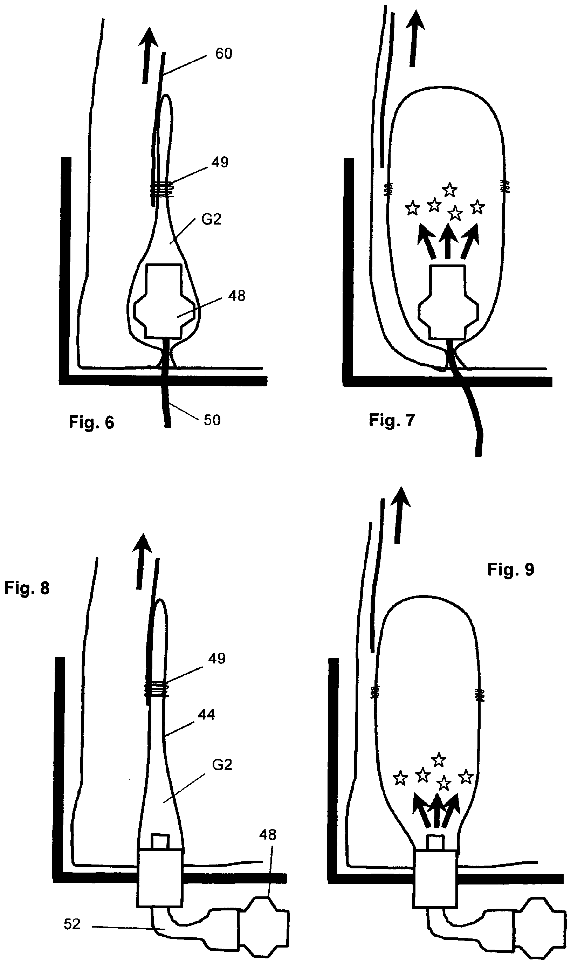

Die Figuren 6 und 7 zeigen eine Variation zu dem eben Beschriebenen. Hier weist die Betätigungseinheit 40 kein gehäuseartiges Bauteil auf, sondern die als Inflator dienende zweite Zündkapsel 48 wird ausschließlich durch ihr Zündkabel 50 gehalten. Dies kann die Herstellung des Gassackmoduls vereinfachen, da keine Änderungen gegenüber dem Gehäuse 20 eines herkömmlichen Gassackmoduls vorgenommen werden müssen.

Die Figuren 8 und 9 zeigen eine weitere Variation. Hier befindet sich die als Inflator dienende zweite Zündkapsel 48 außerhalb der zweiten Hülle 44 und ist mit dem zweiten Gasraum G2 mittels eines rohrartigen Gasleitelements 52 verbunden.

Im ersten Ausführungsbeispiel kann die zweite Hülle 44 einstückig gewebt sein ("one piece woven").

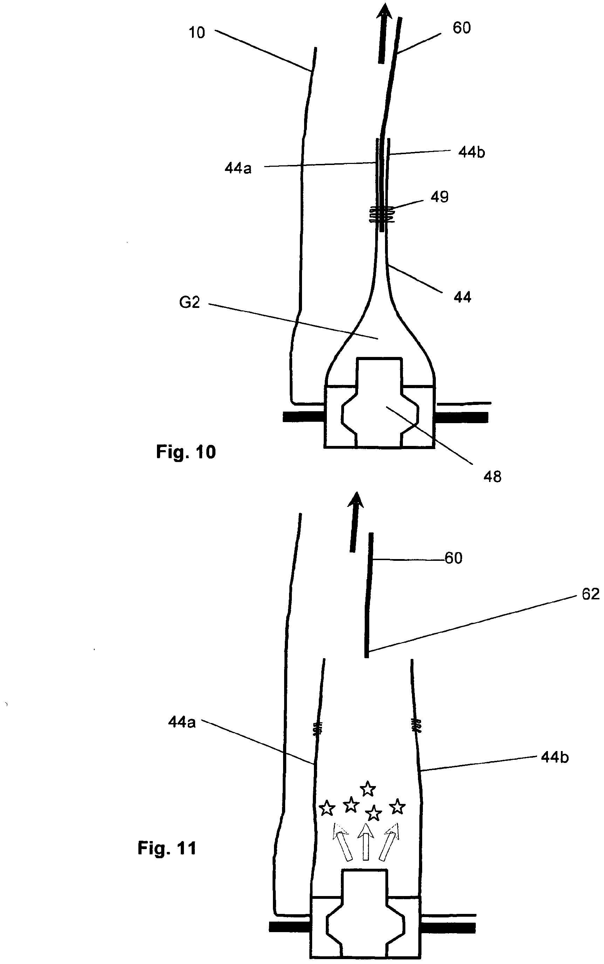

Die Figuren 10 und 11 zeigen ein zweites Ausführungsbeispiel der ersten Ausführungsform der Betätigungseinheit 40. Hier erstreckt sich das zweite Ende des Bandes 60 zwischen zwei Lagen 44a und 44b der zweiten Hülle 44, mit welchen es ebenfalls mittels einer Reißnaht 49 vernäht ist. Auch hier liegt also ein dreiteiliger Aufbau vor, wobei jedoch die Abfolge der Lagen anders ist als im ersten Ausführungsbeispiel; eine Abfolge der Lagen wie im ersten Ausführungsbeispiel wäre jedoch auch möglich. Zunächst ist auch hier die zweite Hülle 44 verschlossen und umschließt einen zweiten Gasraum G2. Wird die zweite Zündkapsel 48 gezündet und der zweite Gasraum G2 daraufhin mit Gas befüllt, so werden auch hier durch den Gasdruck die beiden Lagen der zweiten Hülle 44 auseinander gedrückt, wodurch die Reißnaht reißt und das zweite Ende 62 des Bandes 60 freigegeben wird. Hier ist die zweite Hülle 44 nach Freigabe des zweiten Endes des Zugbandes 60 geöffnet und das Gas kann in den ersten Gasraum G1 eintreten.

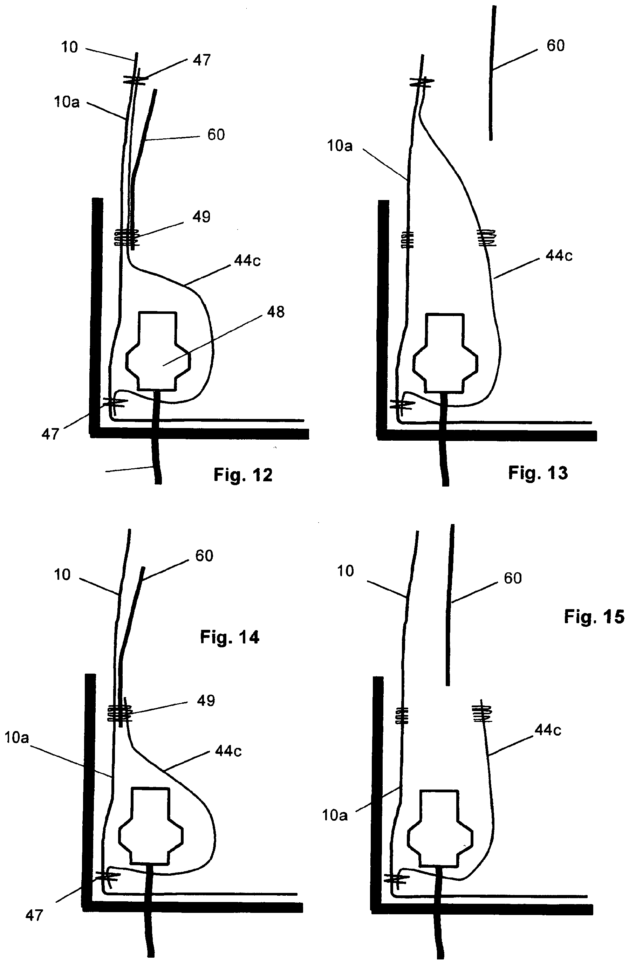

Die Figuren 12 und 13 zeigen ein drittes Ausführungsbeispiel der ersten Ausführungsform der Erfindung. Hier sind die erste Hülle und die zweite Hülle nicht vollständig voneinander getrennt, sondern sie "teilen" sich einen Abschnitt 10a der ersten Hülle 10, an welche eine Lage 44c der zweiten Hülle 44 mittels einer geschlossenen, dauerhaften Naht 47 angenäht ist. Ein entsprechendes Verkleben, Verschweißen oder dergleichen wäre natürlich ebenso möglich. Zusätzlich ist auch hier eine Reißnaht 49 vorgesehen, welche das Zugband 60, den Abschnitt 10a der ersten Hülle und die Lage 44c der zweiten Hülle miteinander verbindet. Die Funktionsweise ist wie die in den Figuren 6 und 7 gezeigte. Anstatt eines Abschnitts der ersten Hülle könnte auch ein Abschnitt einer Verstärkungslage derselben verwendet werden. Es ist in diesem Ausführungsbeispiel zu bevorzugen, die Zündkapsel (entsprechend dem in den Figuren 6 und 7 Gezeigten) nur über ihr Zündkabel 50 zu halten.

Die Figuren 14 und 15 zeigen eine Variante des dritten Ausführungsbeispiels, deren Funktionsweise der des zweiten Ausführungsbeispiels (Figuren 10 und 11) entspricht. Auch hier "teilen" sich erste Hülle 10 und zweite Hülle 44 einen Abschnitt 10a der ersten Hülle 10, an welchen eine Lage 14c der zweiten Hülle 44 angenäht ist. Hier bilden die dauerhafte Naht 47 und die Reißnaht im Ausgangszustand eine geschlossene Verbindung, welche entlang der Reißnaht bei Zündung der zweiten Zündkapsel 44 aufbricht. Das zweite Ende 64 des Zugbandes 40 kann zwischen dem Abschnitt 10a der ersten Hülle 10 und der Lage 44c der zweiten Hülle mittels der Reißnaht 44 gehalten sein.

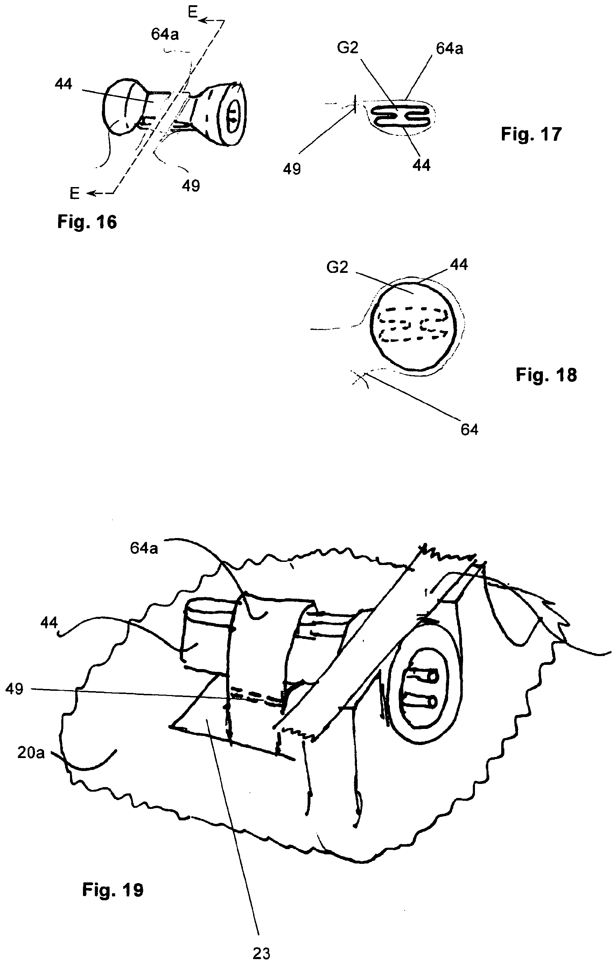

Mit Bezug auf die Figuren 16 bis 18 wird nun noch eine zweite Ausführungsform der Betätigungseinheit 40 beschrieben. Hier ist die zweite Hülle 44 vorzugsweise ein dünnes Metallblech, welches im in den Figuren 8 und 9 gezeigten Ausgangszustand zusammengefaltet ist. Das zweite Ende 64 des Bandes 60 ist als Schlaufe 64a ausgebildet, die sich um die zweite Hülle 44 erstreckt, welche hierzu vorzugsweise einen im wesentlichen länglich ausgebildeten Abschnitt aufweist.

Die Schlaufe 64a wird auch hier durch eine Reißnaht 49 zusammengehalten, mittels der das Zugband 60 mit sich selbst verbunden ist. Wird nun die sich innerhalb der zweiten Hülle 44 befindende zweite Zündkapsel (von der in Figur 8 nur die Anschluss-Pins zu sehen sind) gezündet, so expandiert auch hier die zweite Hülle 44, wobei sie insbesondere ihren Durchmesser vergrößert, wie dies in Figur 10 gezeigt ist. Dieser Durchmesser ist größer bemessen als der freie innere Durchmesser der Schlaufe 64a, wodurch die Reißnaht zerrissen wird. Also wird auch hier das zweite Ende des Bandes 60 freigegeben, wodurch die Ventilationseinrichtung in ihren zweiten, ungedrosselten Zustand übergeht. In Figur 19 ist zur Verdeutlichung der Funktionsweise die Ausgangsform der zweiten Hülle 44 gestrichelt eingezeichnet.

Die Figur 19 zeigt, wie eine zweite Hülle 44 gemäß der eben beschriebenen zweiten Ausführungsform außen am Gehäuseboden 20a angeordnet werden kann und sich das Zugband 60 durch eine entsprechende Durchbrechung 23 im Gehäuseboden erstreckt. Hierbei können sich beide Enden der zweiten Hülle 44 am Gehäuseboden abstützen. Das die Zündkapsel tragende Ende der zweiten Hülle 44 ist hierbei in einer Aufnahme gehalten und beispielsweise mittels einer Schelle gesichert, was in Figur 11 jedoch nur symbolisch dargestellt ist. Die Durchbrechung 23 dient hierbei zusätzlich als weitere Ventilationseinrichtung, nämlich als nicht-adaptive Ventilationseinrichtung.

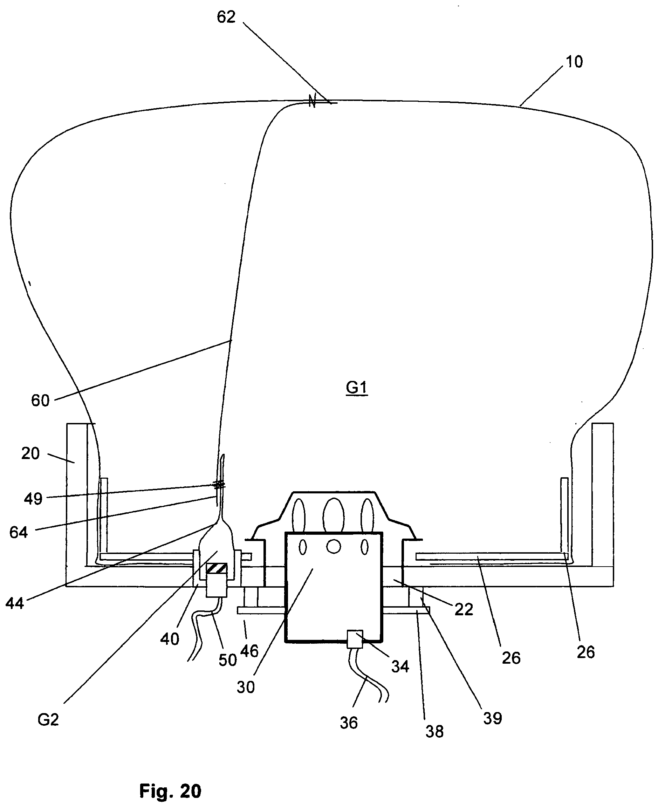

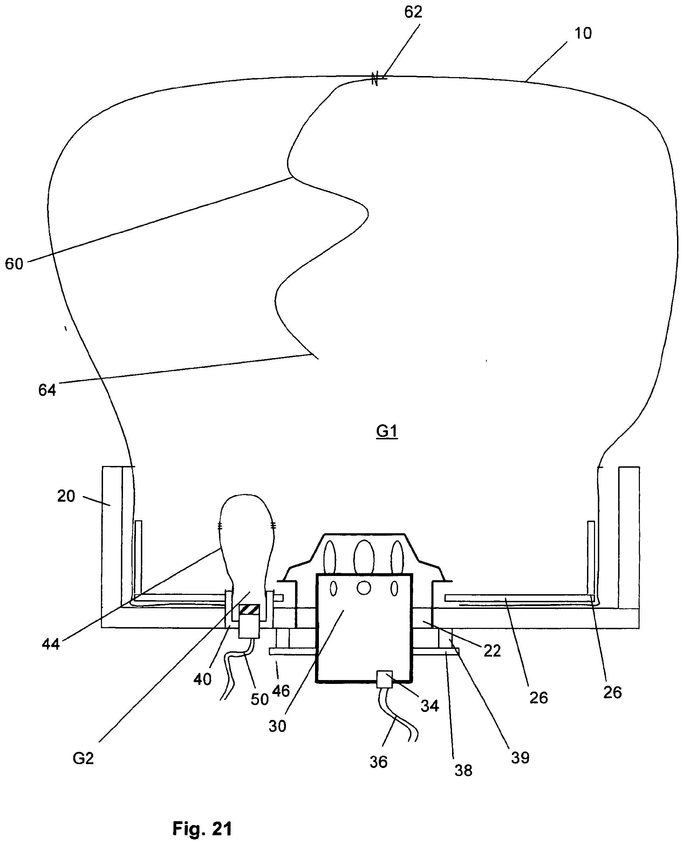

Bislang wurde die Erfindung anhand einer Anwendung beschrieben, bei der die Betätigungseinheit 40 den Zustand einer adaptiven Ventilationseinrichtung beeinflusst. Dies ist eine sehr wichtige Anwendung, andere Anwendungen sind jedoch ebenso möglich, insbesondere die Beeinflussung der Form, insbesondere der Tiefe, der ersten Hülle. Dies ist in den Figuren 20 und 21 gezeigt. Hier ist das erste Ende 62 des in diesem Fall als Fangband dienenden Zugbandes 60 direkt dauerhaft mit der ersten Hülle 10 verbunden, insbesondere vernäht. Vor der Zündung der zweiten Zündkapsel 50 (also vor Aktivierung der Betätigungseinheit 40) ergibt sich somit eine verringerte maximale Ausdehnung der ersten Hülle (Figur 20), nach der Zündung der zweiten Zündkapsel 50 die volle maximale Ausdehnung der ersten Hülle 10 (Figur 21) ("dual depth"). Sämtliche zuvor beschriebenen Ausführungsformen und -beispiele der Betätigungseinheit 40 können auch für diese Anwendung verwendet werden.

### Bezugszeichenliste

- 10: erste Hülle
- 11: Ventilationseinrichtung
- 12: Ventilationsöffnung
- 14: Tülle
- 20: Gehäuse
- 20a: Gehäuseboden
- 20b: Gehäusewand
- 22: Öffnung
- 23: Durchbrechung
- 24: Diffusor
- 26: Halte- und Deflektorelement
- 26a: Boden
- 26b: Seitenwand
- 30: Gasgenerator
- 32: Treibladung
- 34: erste Zündkapsel
- 36: Zündkabel des Gasgenerators
- 38: Flansch
- 39: Dämpfer
- 40: Betätigungseinheit
- 42: zweites Gehäuse
- 43: Hohlraum
- 44: zweite Hülle
- 44a, b, c: Lagen der zweiten Hülle
- 47: dauerhafte Naht
- 48: zweite Zündkapsel
- 49: Reißnaht
- 50: Zündkabel der zweiten Zündkapsel
- 52: Gasleitelement
- 60: Zugband
- 62: erstes Ende
- 64: zweites Ende
- 64a: Schlaufe
- G1: erster Gasraum
- G2: zweiter Gasraum

## Patentansprüche

1. Gassack-Modul mit
einer einen ersten Gasraum (G1) umschließenden ersten Hülle (10),
einem ersten Inflator zur Befüllung des ersten Gasraums (G1),
wenigstens einer adaptiven Beeinflussungseinrichtung, insbesondere zur aktiven Beeinflussung der Ventilation des ersten Gasraumes (G1) oder der Form der ersten Hülle (10),
einer Betätigungseinheit (40) zur Betätigung der Beeinflussungseinrichtung, wobei die Betätigungseinheit (40) eine einen zweiten Gasraum (G2) umschließende zweite Hülle (44) und einen vom ersten Inflator unabhängigen zweiten Inflator zur Befüllung des zweiten Gasraums (G2) aufweist, welcher innerhalb des zweiten Gasraumes (G2) angeordnet oder mittels eines Gasleitelements mit diesem verbunden ist, wobei
sich der Zustand der Beeinflussungseinrichtung durch Befüllung des zweiten Gasraums (G2) durch die Gasquelle ändert,
**dadurch gekennzeichnet,**
**dass** ein Zugelement vorgesehen ist, dessen erstes Ende (62) mit der adaptiven Beeinflussungseinrichtung gekoppelt ist oder die adaptiven Beeinflussungseinrichtung bildet und dessen zweites Ende (64) bei nicht befülltem zweitem Gasraum (G2) mit der zweiten Hülle (44) der Betätigungseinheit (40) gekoppelt und bei befülltem zweitem Gasraum (G2) von der zweiten Hülle (44) entkoppelt ist.

2. Gassack-Modul nach Anspruch 1, **dadurch gekennzeichnet, dass** die zweite Hülle (44) vollständig innerhalb des ersten Gasraums (G1) angeordnet ist.

3. Gassack-Modul nach Anspruch 1, **dadurch gekennzeichnet, dass** die zweite Hülle (44) vollständig außerhalb des ersten Gasraums (G1) angeordnet ist.

4. Gassackmodul nach Anspruch einem der vorangehenden Ansprüche, **dadurch gekennzeichnet, dass** der Inflator eine innerhalb des zweiten Gasraums (G2) angeordnete Zündkapsel (48) ist, wobei die Zündkapsel vorzugsweise durch ihr Zündkabel (50) gehalten ist.

5. Gassack-Modul nach einem der vorangehenden Ansprüche, **dadurch gekennzeichnet, dass** die zweite Hülle (44) auch nach Befüllung des zweiten Gasraums geschlossen bleibt.

6. Gassack-Modul nach Anspruch 5, **dadurch gekennzeichnet, dass** das zweite Ende des Zugelementes als Schlaufe (64a) ausgeführt ist, welche sich bei nicht befülltem zweitem Gasraum (G2) um die zweite Hülle (44) erstreckt und durch die bei Befüllung des zweiten Gasraums (G2) expandierende zweite Hülle (44) geöffnet wird.

7. Gassack-Modul nach einem der Ansprüche 1 bis 4, **dadurch gekennzeichnet, dass** sich die zweite Hülle (44) bei Befüllung des zweiten Gasraums (G2) öffnet.

8. Gassack-Modul nach einem der Ansprüche 1 bis 5 oder Anspruch 7, **dadurch gekennzeichnet, dass** das zweite Ende (64) des Zugelementes über eine Aufbrech-Verbindung mit der zweiten Hülle (44) verbunden ist solange der zweite Gasraum (G2) nicht befüllt ist.

9. Gassackmodul nach Anspruch 8, **dadurch gekennzeichnet, dass** die Aufbrech-Verbindung eine Reißnaht (29) ist, welche sich durch das Zugelement und zwei Lagen (44a, 44b) der zweiten Hülle (49) erstreckt.

10. Gassackmodul nach einem der vorangehenden Ansprüche, **dadurch gekennzeichnet, dass** die erste Hülle und die zweite Hülle vollständig voneinander getrennt sind.

11. Gassackmodul nach einem der Ansprüche 1 bis 9, **dadurch gekennzeichnet, dass** ein Abschnitt der ersten Hülle oder ein Abschnitt einer Verstärkungslage der ersten Hülle einen Teil der zweiten Hülle bildet.

12. Gassack-Modul nach einem der vorangehenden Ansprüche, **dadurch gekennzeichnet, dass** die adaptive Beeinflussungseinrichtung eine adaptive Ventilationseinrichtung (11) zur Ventilation des ersten Gasraumes (G1) ist, welche wenigstens eine sich vorzugsweise in der ersten Hülle (10) befindende Ventilationsöffnung (12) und wenigstens ein Drosselelement aufweist, welches in einem ersten Zustand den Gasfluss durch die Ventilationsöffnung (12) stärker drosselt als in einem zweiten Zustand, aufweist, wobei sich der Zustand des Drosselelements durch Befüllung des zweiten Gasraums (G2) durch die Gasquelle ändert.

13. Gassackmodul nach Anspruch 12, **dadurch gekennzeichnet, dass** wenigstens eine weitere, insbesondere eine nicht-adaptive Ventilationseinrichtung vorgesehen ist.

14. Gassackmodul nach einem der Ansprüche 1 bis 11, **dadurch gekennzeichnet, dass** das erste Ende (62) des Zugelements direkt mit der ersten Hülle verbunden ist.

## Claims

1. Airbag module with
a first envelope (10) enclosing a first gas space (G1),
a first inflator for filling the first gas space (G1),
at least one adaptive influencing device, in particular for the active influencing of the ventilation of the first gas space (G1) or the shape of the first envelope (10),
an actuating unit (40) for actuating the influencing device, wherein the actuating unit (40) has a second envelope (44) enclosing a second gas space (G2) and a second inflator independent of the first inflator for filling the second gas space (G2), which second inflator is arranged inside the second gas space (G2) or is connected to the latter by a gas conductive element, wherein
the state of the adaptive influencing device changes due to filling of the second gas space (G2) by the gas source,
**characterised by** that
a tensile element is provided, the first end (62) of which is coupled to the adaptive influencing device or forms the adaptive influencing device and the second end (64) of which is coupled to the second envelope (44) of the actuating unit (40) when the second gas space (G2) is not filled and is uncoupled from the second envelope (44) when the second gas space (G2) is filled.

2. Airbag module according to claim 1, **characterised by** that the second envelope (44) is arranged completely inside the first gas space (G1).

3. Airbag module according to claim 1, **characterised by** that the second envelope (44) is arranged completely outside the first gas space (G1).

4. Airbag module according to any one of the preceding claims, **characterised by** that the inflator is a detonator (48) arranged inside the second gas space (G2), wherein the detonator is preferably held by its ignition cable (50).

5. Airbag module according to any one of the preceding claims, **characterised by** that the second envelope (44) remains closed even after filling of the second gas space.

6. Airbag module according to claim 5, **characterised by** that the second end of the tensile element is executed as a loop (64a), which extends around the second envelope (44) when the second gas space (G2) is not filled and is opened by the second envelope (44) expanding when the second gas space (G2) is filled.

7. Airbag module according to any one of claims 1 to 4, **characterised by** that the second envelope (44) opens when the second gas space (G2) is filled.

8. Airbag module according to any one of claims 1 to 5 or claim 7, **characterised by** that the second end (64) of the tensile element is connected to the second envelope (44) via a break-open connection as long as the second gas space (G2) is not filled.

9. Airbag module according to claim 8, **characterised by** that the break-open connection is a tear seam (29), which extends through the tensile element and two layers (44a, 44b) of the second envelope (44).

10. Airbag module according to any one of the preceding claims, **characterised by** that the first envelope and the second envelope are completely separate from one another.

11. Airbag module according to any one of claims 1 to 9, **characterised by** that a section of the first envelope or a section of a reinforcing layer of the first envelope forms part of the second envelope.

12. Airbag module according to any one of the preceding claims, **characterised by** that the adaptive influencing device is an adaptive ventilation device (11) for ventilation of the first gas space (G1), which device has at least one ventilation opening (12) preferably located in the first envelope (10) and at least one throttling element, which throttles the gas flow through the ventilation opening (12) more strongly in a first state than in a second state, wherein the state of the throttling element changes due to filling of the second gas space (G2) by the gas source.

13. Airbag module according to claim 12, **characterised by** that at least one other, in particular non-adaptive ventilation device is provided.

14. Airbag module according to any one of claims 1 to 11, **characterised by** that the first end (62) of the tensile element is connected directly to the first envelope.

## Revendications

1. Module d'airbag comprenant
une première enveloppe (10) entourant un premier compartiment de gaz (G1),
un premier gonfleur destiné à remplir le premier compartiment de gaz (G1),
au moins un système d'action adaptatif, en particulier destiné à l'action active sur la désaération du premier compartiment de gaz (G1) ou sur la forme de la première enveloppe (10),
une unité d'actionnement (40) destinée à actionner le système d'action, l'unité d'actionnement (40) comportant une seconde enveloppe (44) entourant un second compartiment de gaz (G2) et un second gonfleur indépendant du premier gonfleur destiné à remplir le second compartiment de gaz (G2), qui est disposé à l'intérieur du second compartiment de gaz (G2) ou relié à celui-ci au moyen d'un élément de guidage de gaz,
l'état du système d'action se modifiant par le remplissage du second compartiment de gaz (G2) par la source de gaz,
**caractérisé**
**en ce qu'**un élément de traction est prévu, dont la première extrémité (62) est couplée au système d'action adaptatif ou forme le système d'action adaptatif et dont la seconde extrémité (64) est couplée à la seconde enveloppe (44) de l'unité d'actionnement (40) lorsque le second compartiment de gaz (G2) n'est pas rempli et découplée de la seconde enveloppe (44) lorsque le second compartiment de gaz (G2) est rempli.

2. Module d'airbag selon la revendication 1, **caractérisé en ce que** la seconde enveloppe (44) est disposée entièrement à l'intérieur du premier compartiment de gaz (G1).

3. Module d'airbag selon la revendication 1, **caractérisé en ce que** la seconde enveloppe (44) est disposée entièrement à l'extérieur du premier compartiment de gaz (G1).

4. Module d'airbag selon l'une des revendications précédentes, **caractérisé en ce que** le gonfleur est une capsule d'amorce (48) disposée à l'intérieur du second compartiment de gaz (G2), la capsule d'amorce étant de préférence maintenue par son câble d'amorce (50).

5. Module d'airbag selon l'une des revendications précédentes, **caractérisé en ce que** la seconde enveloppe (44) reste fermée même après remplissage du second compartiment de gaz.

6. Module d'airbag selon la revendication 5, **caractérisé en ce que** la seconde extrémité de l'élément de traction se présente sous la forme d'une boucle (64a), qui s'étend autour de la seconde enveloppe (44) lorsque le second compartiment de gaz (G2) n'est pas rempli et qui est ouverte par la seconde enveloppe (44) s'agrandissant lors du remplissage du second compartiment de gaz (G2).

7. Module d'airbag selon l'une des revendications 1 à 4, **caractérisé en ce que** la seconde enveloppe (44) s'ouvre lors du remplissage du second compartiment de gaz (G2).

8. Module d'airbag selon l'une des revendications 1 à 5 ou la revendication 7, **caractérisé en ce que** la seconde extrémité (64) de l'élément de traction est reliée à la seconde enveloppe (44) par le biais d'une liaison séparable tant que le second compartiment de gaz (G2) n'est pas rempli.

9. Module d'airbag selon la revendication 8, **caractérisé en ce que** la liaison séparable est une couture destinée à la rupture (29), qui s'étend à travers l'élément de traction et deux couches (44a, 44b) de la seconde enveloppe (49).

10. Module d'airbag selon l'une des revendications précédentes, **caractérisé en ce que** la première enveloppe et la seconde enveloppe sont complètement séparées l'une de l'autre.

11. Module d'airbag selon l'une des revendications 1 à 9, **caractérisé en ce qu'**une portion de la première enveloppe ou une portion d'une couche de renfort de la première enveloppe forme une partie de la seconde enveloppe.

12. Module d'airbag selon l'une des revendications précédentes, **caractérisé en ce que** le système d'action adaptatif est un système d'évent adaptatif (11) destiné à désaérer le premier compartiment de gaz (G1), qui comporte au moins un orifice d'évent (12) se trouvant de préférence dans la première enveloppe (10) et au moins un élément d'étranglement, qui, dans un premier état, étrangle l'écoulement de gaz par l'orifice d'évent (12) plus que dans un second état, l'état de l'élément d'étranglement se modifiant par le remplissage du second compartiment de gaz (G2) par la source de gaz.

13. Module d'airbag selon la revendication 12, **caractérisé en ce qu'au** moins un autre système d'évent, en particulier non adaptatif, est prévu.

14. Module d'airbag selon l'une des revendications 1 à 11, **caractérisé en ce que** la première extrémité (62) de l'élément de traction est directement reliée à la première enveloppe.
